# EUROPÄISCHE PATENTSCHRIFT

(11) **EP 3 054 264 B1**
(45) Veröffentlichungstag und Bekanntmachung des Hinweises auf die Patenterteilung: **12.04.2017**
(21) Anmeldenummer: 15153745.3
(22) Anmeldetag: 04.02.2015
(51) Int. Cl.: G01B 11/27

(54) **Vorrichtung und Verfahren zum Ermitteln der Solllagen-Abweichung zweier Körper**
Device and method for determining the deviation of two bodies from their intended position
Dispositif et procédé de détermination d'écart de positions nominales de deux corps

(43) Veröffentlichungstag der Anmeldung: 10.08.2016
(73) Patentinhaber: Prüftechnik Dieter Busch AG, 85737 Ismaning (DE)
(72) Erfinder: Hölzl, Roland, 81369 München (DE)

(56) Entgegenhaltungen:
- EP-A1- 2 801 788
- EP-A1- 2 801 789
- DE-A1- 10 117 390
- DE-A1-102013 210 736

## Beschreibung

Die Erfindung betrifft eine Vorrichtung und ein Verfahren zum Erfassen der Solllagen-Abweichung zweier Körper, mit einer ersten Messeinheit zum Ansetzen an den ersten Körper, einer zweiten Messeinheit zum Ansetzen an den zweiten Körper, sowie einer Auswerteeinheit.

Eine solche Vorrichtung kann alternativ bzw. kumulativ auch zum Ermitteln der Ausrichtung von zwei Körpern, insbesondere Wellen zueinander ausgebildet sein.

Typischerweise weist bei solchen Vorrichtungen der eingangs genannten Art mindestens eine der beiden Messeinheiten eine Lichtquelle zum Erzeugen eines Lichtstrahls auf, dessen Auftreffpunkt auf einem oder mehreren Detektoren an der anderen Messeinheit oder auf einem Detektor an der mit der Lichtquelle versehenen Messeinheit ermittelt wird, wobei im letzteren Fall die andere Messeinheit den Lichtstrahl zurückreflektiert. Typischerweise wird zum Ermitteln der Ausrichtung der Körper - z.B. Wellen - zueinander die Lage des AuftreffPunkts des Lichtstrahls in mehreren Rotationswinkel-Positionen ermittelt, wozu die Messeinheiten entlang der Umfangsflächen der Wellen verschoben werden oder die Wellen mit den an die Umfangsflächen angesetzten Messeinheiten gedreht werden.

In der DE 33 20 163 A1 und der DE 39 11 307 A1 sind Wellenausrichtungs-Messvorrichtungen beschrieben, bei welchen die erste Messeinheit einen Lichtstrahl aussendet, der von einem Spiegelprisma der zweiten Messeinheit auf einen optischen Detektor der ersten Messeinheit zurückreflektiert wird.

In der DE 33 35 336 A1 ist eine Wellenausrichtungs-Messvorrichtung beschrieben, bei welcher sowohl die erste als auch die zweite Messeinheit jeweils einen Lichtstrahl aussenden und einen optischen Detektor aufweisen, wobei der Lichtstrahl jeweils auf den Detektor der anderen Messeinheit gerichtet wird.

Eine nach diesem Prinzip arbeitende Wellenausrichtungs-Messvorrichtung ist auch in der US 6,873,931 B1 beschrieben, wobei die beiden Messeinheiten jeweils mit zwei zweiachsigen Beschleunigungssensoren zur automatischen Erfassung des Drehwinkels der Welle versehen sind.

Aus der DE 38 14 466 A1 ist eine Wellenausrichtungs-Messvorrichtung bekannt, bei welcher die erste Messeinheit einen Lichtstrahl aussendet, der auf zwei in axialer Richtung hintereinander angeordnete optische Detektoren der zweiten Messeinheit fällt.

Aus der WO 03/067187 A ist eine Wellenausrichtungs-Messvorrichtung bekannt, bei welcher die erste Messeinheit einen fächerförmigen Strahl aussendet, der auf zwei in axialer Richtung hintereinander angeordnete optische Detektoren der zweiten Messeinheit fallt.

Aus der WO 00/28275 A1 ist eine Wellenausrichtungs-Messvorrichtung bekannt, bei welcher zwei Messeinheiten an jeweils eine Stirnseite der beiden Wellen angebracht werden, wobei die erste Messeinheit einen fächerförmigen Lichtstrahl aussendet, der drei in einer Ebene der zweiten Messvorrichtung angeordnete Markierungsstifte seitlich trifft.

In der EP 0 962 746 A2 ist eine Wellenausrichtungs-Messvorrichtung beschrieben, bei welcher die erste Einheit eine Quelle für einen Lichtstrahl in einer ersten Farbe, einen Strahlteiler sowie einen farbempfindlichen CCD-Detektor und die zweite Einheit eine Quelle für einen Lichtstrahl in einer zweiten Farbe sowie einen Farbteiler (farbselektiver Strahlteiler) aufweist, der für die erste Farbe reflektierend und für die zweite Farbe transmittierend ist, wobei die Lichtquelle der zweiten Einheit von der ersten Einheit aus gesehen hinter dem Farbteiler angeordnet ist und die Lichtquelle der ersten Einheit von der zweiten Einheit aus gesehen hinter dem Strahlteiler angeordnet ist. Der von der ersten Einheit ausgesendete Lichtstrahl durchdringt zunächst den Strahlteiler der ersten Einheit und wird dann an dem Farbteiler der zweiten Einheit reflektiert, wobei dieser reflektierte Strahl wiederum an dem Strahlteiler der ersten Einheit reflektiert wird, um auf den Detektor zu gelangen. Der Lichtstrahl aus der zweiten Einheit durchdringt zunächst den Farbteiler der zweiten Einheit und wird von dem Strahlteiler der ersten Einheit auf den Detektor reflektiert.

In der EP 2 093 537 A1 ist Wellenausrichtungs-Messvorrichtung beschrieben, bei welcher die erste Messeinheit einen aufgefächerten Lichtstrahl aussendet, der auf zwei seitlich in Abstand zueinander parallel angeordnete optische Streifendetektoren der zweiten Messeinheit fällt, wobei die Längsrichtung der Detektoren senkrecht zu der Fächerebene des Lichtstrahls angeordnet ist.

Bei allen hier gewürdigten Wellenausrichtungs-Messvorrichtungen wird jeweils der Auftreffpunkt eines Lichtstrahls auf einer Detektorfläche ermittelt und ausgewertet.

Aus der DE 40 41 723 A1 ist eine Vorrichtung zur Bestimmung der Position eines Messpunkts relativ zu einem Bezugspunkt zur Steuerung oder Kontrolle des Vortriebs einer Bohrung bekannt, welche mehrere Messstationen aufweist, die in der Bohrung bzw. am Bohrkopf angeordnet sind und jeweils eine Kamera mit einer Markierung aufweisen, wobei jede Kamera die Markierung der benachbarten Kamera bzw. Messstation aufnimmt.

Aus der WO 2010/042039 A1 ist eine Wellenausrichtungsmessvorrichtung bekannt, bei welcher jede der beiden Messeinheiten mit einer in einem Gehäuse angeordneten Kamera versehen ist, wobei die der anderen Einheit zugewandte Gehäuseseite mit einem optischen Muster versehen ist, welches von der gegenüberliegende Kamera aufgenommen wird. Die mit dem Muster versehene Gehäuseseite ist dabei jeweils mit einer Öffnung versehen, durch welche das gegenüberliegende Muster abgebildet wird. Bei einer alternativen Ausführung ist eine der beiden Einheiten nur mit einer Kamera, nicht aber mit einem Muster versehen, während die andere Einheit keine Kamera aufweist, jedoch mit einem dreidimensionalen Muster versehen ist.

In der EP 1 211 480 A2 ist eine Wellenausrichtungsmessvorrichtung beschrieben, bei welcher die erste Messeinheit mit einer Lichtquelle versehen ist, welche einen Lichtstrahl auf die mit einer Mattscheibe versehenen zweiten Messeinheit richtet; die der ersten Messeinheit abgewandte Seite der Mattscheibe wird mittels einer entsprechenden Optik auf einen ebenfalls Teil der zweiten Messeinheit bildenden Bilddetektor abgebildet.

In der DE 101 43 812 A1 und der DE10117390A1 ist eine Wellenausrichtungsmessvorrichtung beschrieben, bei welcher die erste Messeinheit eine Lichtquelle zum Erzeugen eines aufgefächerten Strahls aufweist und die gegenüberliegende zweite Messeinheit ein teilreflektierendes optisches System mit rückwärtiger Mattscheibe sowie eine Kamera aufweist, die die der ersten Messeinheit abgewandte Seite der Mattscheibe mit einem primären Lichtfleck des direkt von der Lichtquelle kommenden Strahls und mit einem sekundären Lichtfleck des von dem teilreflektierenden optischen System der zweiten Messeinheit und einem Reflektor an der Stirnseite der ersten Messeinheit reflektierten Strahls aufnimmt.

Von der Firma Wente CamSorik GmbH, 38108 Braunschweig, Deutschland, ist unter der Bezeichnung LaserTrac ein Laserempfänger mit Kamera für Maschinenvermessung erhältlich.

Aus der EP 2 801 788 A1 ist eine Vorrichtung zum Ermitteln der Lage zweier mechanischer Elemente bzw. Körper zueinander bekannt, bei welcher eine erste Messeinheit zum Ansetzen an ein erstes mechanisches Element bzw. einen ersten Körper der beiden mechanischen Elemente bzw. Körper Mittel zum Erzeugen mindestens eines Lichtstrahlbündels, eine Streufläche zum Streuen von auf die Streufläche auftreffendem Licht und eine Kamera zur Aufnahme von Bildern der Streufläche aufweist. Diese bekannte Vorrichtung eignet sich kumulativ bzw. alternativ auch zur Erfassung bzw. Ermittlung der Solllagen-Abweichung der Körper von einer Soll-Lage. Die Kamera ist bei dieser bekannten Lösung seitlich schräg zu der Streufläche angebracht bzw. die optische Achse der Kamera ist nicht rechtwinkelig zur Streufläche ausgerichtet. Eine zweite Messeinheit zum Ansetzen an das zweite mechanische Element bzw. den zweiten Körper weist eine Reflektoranordnung auf, welche der ersten Messeinheit zugewandt ist, wenn die Messeinheiten an das jeweilige mechanische Element bzw. die jeweiligen Körper angesetzt sind, um das Lichtstrahlbündel auf die Streufläche zu reflektieren. Ferner ist bei dieser bekannten Lösung eine Auswerteeinheit vorgesehen, die ausgebildet ist, um aus von der Kamera gelieferten Bilddaten die Auftreffposition des an der Reflektoranordnung reflektierten Lichtstrahlbündels auf der Streufläche und daraus die Lage des ersten Körpers und des zweiten Körpers zueinander zu ermitteln bzw. kumulativ oder alternativ die Soll-Lagenabweichung der Körper von einer jeweiligen Soll-Lage zu erfassen bzw. zu ermitteln. Zur Bestimmung der Mittelpunktkoordinaten der Auftreffpositionen ist es erforderlich, die perspektivischen Verzerrungen des optischen Systems, die durch die von einer rechtwinkeligen Ausrichtung zur Streufläche abweichenden Ausrichtung der optischen Achse der Kamera hervorgerufen werden, durch geeignete Auswertung der von der Kamera aufgenommenen Bilder aufwendig zu kompensieren.

Es ist Aufgabe der vorliegenden Erfindung, eine Vorrichtung und ein Verfahren zum Erfassen bzw. Ermitteln einer Solllagen-Abweichung zweier Körper anzugeben, mit welchen auf der Grundlage von Kamerabildern einer Streufläche auf einfache und praktische Weise die Solllagen-Abweichung aus den Auftreffpositionen eines Lichtstrahlbündels auf der Streufläche ermittelt werden kann.

Diese Aufgabe wird erfindungsgemäß durch eine Vorrichtung mit den Merkmalen des Anspruchs 1 und durch ein Verfahren mit den Merkmalen des Anspruchs 10 gelöst.

Die erfindungsgemäße Vorrichtung zum Ermitteln bzw. Erfassen einer Solllagen-Abweichung zweier Körper zeichnet sich insbesondere dadurch aus, dass die zweite Messeinheit - also die Messeinheit mit der Reflektoranordnung - eine Kamera zur Aufnahme von Bildern der Streufläche aufweist. Im Unterschied zu der aus der EP 2 801 788 A1 bekannten Lösung ist bei der erfindungsgemäßen Lösung die Kamera zur Aufnahme der Bilder der Streufläche nicht an der ersten Messeinheit vorgesehen, also nicht an der Messeinheit mit Mittel zum Erzeugen mindestens eines Lichtstrahlbündels und mit der Streufläche zum Streuen von auf die Streufläche auftreffendem Licht. Dies hat den Vorteil, dass die optische Achse der Kamera im dem Zustand, in welchem die Messeinheiten an die Körper angesetzt sind, rechtwinkelig bzw. im wesentlichen rechtwinkelig zur Streufläche ausgerichtet werden kann. Dies ist bei der aus der EP 2 801 788 A1 bekannten Lösung nicht möglich, da dies den Strahlungsverlauf des Lichtstrahlbündels versperren würde. Eine rechtwinkelige Ausrichtung bzw. im wesentlichen rechtwinkelige Ausrichtung der optischen Achse der Kamera zur Streufläche bringt den Vorteil mit sich, dass keine perspektivischen Verzerrungen auftreten, die bei der aus der EP 2 801 788 A1 bekannten Lösung aufwendig durch Auswerten der von der Kamera aufgenommenen Bilder bzw. Bilderdaten kompensiert werden müssen.

Insgesamt betrachtet kann mit der erfindungsgemäßen Vorrichtung auf der Grundlage der Kamerabilder der Streufläche auf einfache und praktische Weise die Solllagen-Abweichung der Körper ermittelt werden, und zwar aus den Auftreffpositionen des Lichtstrahlbündels auf der Streufläche bzw. auf der Grundlage der Auftreffpositionen des Lichtstrahlbündels auf der Streufläche.

Die Auswerteeinheit ist ausgebildet, um aus von der Kamera gelieferten Bilddaten wenigstens eine Auftreffposition des an der Reflektoranordnung reflektierten Lichtstrahlbündels auf der Streufläche zu ermitteln und aus der Auftreffposition eine Abweichung der Lage des ersten Körpers von einer Soll-Lage des ersten Körpers und/oder eine Abweichung der Lage des zweiten Körpers von einer Soll-Lage des zweiten Körpers zu erfassen bzw. zu ermitteln. Um aus der Austreffposition die Abweichung der Lage des ersten Körpers von einer Soll-Lage des ersten Körpers und die Abweichung der Lage des zweiten Körpers von einer Soll-Lage des zweiten Körpers zu erfassen bzw. zu ermitteln, kann die Auswerteeinheit dazu eingerichtet sein, die Abweichung bzw. Verlagerung der Auftreffposition des an der Reflektoranordnung reflektierten Lichtstrahlbündels auf der Streufläche von einer Referenzposition bzw. Sollposition auf der Streufläche zu ermitteln, wobei die Referenzposition bzw. die Soll-Position die Position des reflektierten Lichtstrahlbündes ist, wenn sich der erste Körper in der Soll-Lage des ersten Körpers und sich der zweite Körper in der Soll-Lage des zweiten Körpers befindet. Die Abweichung bzw. Verlagerung kann dabei z.B. in Form von Koordinatendifferenzen angegeben werden, welche die Abweichung der Position des reflektierten Lichtstrahls auf der Streufläche zu der Referenzposition bzw. Soll-Position quantifizieren. Um eine Abweichung des Körpers bzw. der Körper von der bzw. den Solllagen zu erfassen, kann es auch lediglich ausreichend sein, dass die Auswerteinheit dazu eingerichtet ist, bei einer Abweichung der Auftreffposition des an der Reflektoranordnung reflektierten Lichtstrahlbündels auf der Streufläche von der Referenzposition bzw. Sollposition diese Abweichung bzw. Verlagerung anzuzeigen bzw. auf diese - z.B. durch Ausgeben eines Warnsignals bzw. Hinweissignals - hinzuweisen. Die Lage des ersten bzw. zweiten Körpers kann z.B. insbesondere durch eine Körperachse des ersten bzw. zweiten Körpers gekennzeichnet bzw. definiert sein, so dass wenn von der Lage des ersten Körpers bzw. zweiten Körpers die Rede ist die Lage der Körperachse des ersten bzw. zweiten Körpers z.B. in einem vorgegebenen dreidimensionalen Koordinatensystem zu verstehen sein kann. Die Körperachse kann z.B. eine Längsachse des Körpers sein oder eine beliebige andere den Körper durchdringende Achse.

Bei dem ersten Körper und/oder dem zweiten Körper kann es sich um einen beliebigen Körper handeln, dessen Abweichung von einer Soll-Lage in einem dreidimensionalen Koordinatensystem bzw. dreidimensionalen Raumsystem mittels der erfindungsgemäßen Vorrichtung erfasst bzw. ermittelt werden kann. Insbesondere kann es sich bei dem ersten und zweiten Körper um eine Welle handeln, die über eine Kupplung miteinander verbunden sind, wobei die Wellen in ihrer jeweiligen Soll-Lage miteinander fluchtend ausgerichtet sind, so dass mittels der erfindungsgemäßen Vorrichtung vorteilhaft eine nachteilige Abweichung von einer fluchtenden Ausrichtung erfasst werden kann. Ein Abweichen des oder der Körper kann sich z.B. infolge einer thermischen Ausdehnung ergeben. Man denke hierbei z.B. an ein "Herausbewegen" der Wellen aus der fluchtenden Ausrichtung derselben zueinander infolge einer thermischen Ausdehnung während des laufenden Betriebs der Wellen. Für technische Systeme kann mittels der erfindungsgemäßen Vorrichtung insbesondere eine Überwachungsfunktion übernommen werden, die Alarm schlägt, sobald wenigstens einer der Körper von seiner Soll-Lage abweicht bzw. von seiner Soll-Lage um ein vorgegebenes Maß in wenigstens einer vorgegeben Raumrichtung abweicht. Insbesondere technische Systeme mit zwei Körpern, die schwankenden äußeren Einflüssen unterliegen, wie z.B. Antriebssysteme auf Schiffen, können mit der erfindungsgemäßen Vorrichtung vorteilhaft sehr wirksam überwacht werden.

Zur Verbesserung der Handhabung ist die Kamera bei einer praktischen Ausführungsform lösbar an der Reflektoranordnung bzw. manuell lösbar an der Reflektoranordnung befestigt.

Besonders bevorzugt ist die Kamera über eine an der Reflektoranordnung befestigte Halterung lösbar an der Reflektoranordnung befestigt bzw. die Kamera ist an einer Halterung lösbar befestigt, die an der Reflektoranordnung befestigt ist. Die Halterung ist hierbei ferner an einer der Streufläche abgewandten Seite der Reflektoranordnung befestigt. Über die Halterung kann eine sehr stabile Befestigung bereitgestellt werden. Dadurch, dass die Halterung an einer der Streufläche abgewandten Seite der Reflektoranordnung befestigt ist, wird eine störende Beeinflussung des Strahlengangs des Lichtstrahlbündels auf einfache und praktische Weise ausgeschlossen.

Bei einer weiteren praktischen Ausführungsform weist die zweite Messeinheit ein Smartphone auf, wobei die Kamera an dem Smartphone vorgesehen ist bzw. wobei die Kamera die Kamera des Smartphones ist. Ein Smartphone ist als ein für Endverbraucher konzipiertes Massenprodukt vorteilhaft relativ kostengünstig erhältlich bzw. ohnehin aus anderen Gründen bereits beim Anwender vorhanden.

Auch das Smartphone kann vorteilhaft über eine an der Reflektoranordnung befestigte Halterung an der Reflektoranordnung befestigt sein, wobei die Halterung an einer der Streufläche abgewandten Seite der Reflektoranordnung befestigt sein kann, einhergehend mit den bereits oben dargelegten Vorteilen.

Zur Realisierung einer sehr einfachen Handhabbarkeit bei der Erfassung der Solllagen-Abweichung ist das Smartphone vorzugsweise lösbar an der Halterung befestigt bzw. vorzugsweise lösbar und schenkbar an der Halterung befestigt. Selbstverständlich kann das Smartphone alternativ auch ohne Vorsehen der Halterung lösbar bzw. lösbar und schwenkbar an der Reflektoranordnung befestigt sein. Eine sehr einfache Handhabbarkeit ist insbesondere beim sogenannten "Move" von Vorteil, bei dem das Display des Smartphones vom Benutzer sichtbar sein soll. Bei großen Maschinen mit einer kurzen Welle wird das System sehr nah an das Maschinengehäuse montiert, so dass das Display kaum lesbar ist, insbesondere wenn das Smartphone gerade montiert ist. Aus diesem Grund ist eine Verschenkbarkeit sehr vorteilhaft. Besondere bevorzugt wird das Smartphone quer montiert, damit vorteilhaft ein größerer Schwenkbereich erreicht wird.

Bei einer bevorzugten Ausführungsform kann das Smartphone die Auswerteinheit aufweisen. Die Auswerteinheit kann alternativ auch in Form eines von dem Smartphone beabstandeten Auswerterechners ausgebildet sein bzw. in Form eines Auswertemoduls eines Auswertesystems ausgebildet sein oder eine beliebige andere dem Fachmann geläufige Ausbildung aufweisen. Die von der Kamera gelieferten Bilddaten können über eine beliebige Datenverbindung der Auswerteeinheit zugeführt werden, z.B. über eine Bluetooth-Datenverbindung oder ein übliches Datenübertragungskabel oder je andere dem Fachmann geläufige Datenverbindung.

Bei einer besonders praktischen Ausführungsform der Vorrichtung handelt es sich bei dem ersten Körper um eine erste Welle und bei dem zweiten Körper um eine zweite Wellet, wobei die erste Messeinheit zum Ansetzen an eine Umfangsfläche der ersten Welle und die zweite Messeinheit zum Ansetzen an eine Umfangsfläche der zweiten Welle ausgebildet sind, wobei die Vorrichtung wenigstens ein Inklinometer zum Messen des Drehwinkels einer Drehstellung der ersten Welle und/oder der zweiten Welle aufweist, wobei die Auswerteeinheit ausgebildet ist, um auf der Grundlage der in unterschiedlichen Drehstellungen der ersten und/oder zweiten Welle gemessenen Drehwinkel und auf der Grundlage der Auftreffposition (bzw. Auftreffpositionen) des an der Reflektoranordnung reflektierten Lichtstrahlbündels auf der Streufläche in diesen Drehstellungen den horizontalen Winkelversatz und/oder den vertikalen Winkelversatz und/oder den horizontalen Parallelversatz und/oder den vertikalen Parallelversatz der ersten und/oder zweiten Welle gegenüber einer Soll-Lage der ersten und/oder zweiten Welle zu ermitteln.

Die Anzahl der erforderlichen unterschiedlichen Drehstellungen der ersten und/oder der zweiten Welle um die jeweilige Drehachse der Welle zur Erfassung bzw. Ermittlung des horizontalen Winkelversatzes und/oder des vertikalen Winkelversatzes und/oder des horizontalen Parallelversatzes und/oder des vertikalen Parallelversatzes der ersten und/oder zweiten Welle gegenüber einer Soll-Lage der ersten und/oder zweiten Welle beträgt für eine der Wellen wenigstens fünf, sofern nur eine der Wellen in unterschiedliche Drehstellungen überführt wird, oder beträgt wenigstens drei, sofern jede der beiden Wellen in unterschiedliche Drehstellungen überführt wird.

Bei der obigen besonders praktischen Ausführungsform kann bevorzugt die erste Messeinheit ein erstes Inklinometer zum Messen des Drehwinkels einer Drehstellung der ersten Welle und die zweite Messeinheit ein zweites Inklinometer zum Messen des Drehwinkels einer Drehstellung der zweiten Welle aufweisen, wobei das erste oder zweite Inklinometer insbesondere auch zum Messen eines Kupplungsspiels (sogenannter "Backlash" ) einer die beiden Wellen miteinander verbindenden Kupplung verwendet werden kann.

Wenn die zweite Messeinheit ein Smartphone aufweist, an welchem die Kamera vorgesehen ist (vgl. auch oben), kann auch das wenigstens eine Inklinometer bzw. das zweite Inklinometer an dem Smartphone vorgesehen sein bzw. das wenigstens eine Inklinometer bzw. das zweite Inklinometer kann ein Inklinometer des Smartphones sein. So kann vorteilhaft zur Vereinfachung der Handhabung die bereits bei einem bestehenden Smartphone vorhandene Funktionalität der Neigungsmessung mittels eines Inklinometers zum Einsatz kommen.

Bei dem erfindungsgemäßen Verfahren zum Erfassen einer Solllagen-Abweichung zweier Körper wird eine erste Messeinheit an einen ersten Körper der beiden Körper angesetzt und eine zweite Messeinheit wird an einen zweiten Körper der beiden Körper angesetzt. Ferner wird mittels der ersten Messeinheit ein Lichtstrahlbündel erzeugt, mittels einer Reflektoranordnung der zweiten Messeinheit wird das Lichtstrahlbündel auf eine Streufläche der ersten Messeinheit reflektiert, von einer Kamera der zweiten Messeinheit wird mindestens ein Bild der Streufläche aufgenommen wird, und das mindestens eine Bild wird ausgewertet, um wenigstens eine Auftreffposition (WV, PV) des an der Reflektoranordnung reflektierten Lichtstrahlbündels auf der Streufläche zu ermitteln und daraus eine Abweichung der Lage des ersten Körpers von einer Soll-Lage des ersten Körpers und/oder eine Abweichung der Lage des zweiten Körpers von einer Soll-Lage des zweiten Körpers zu erfassen.

Auch das erfindungsgemäße Verfahren zeichnet sich insbesondere dadurch aus, dass im Unterschied zu der aus der EP 2 801 788 A1 bekannten Lösung die zweite Messeinheit - also die Messeinheit mit der Reflektoranordnung - eine Kamera zur Aufnahme von Bildern der Streufläche aufweist bzw. von einer Kamera der zweiten Messeinheit mindestens ein Bild der Streufläche aufgenommen wird, einhergehend mit den bereits oben dargelegten Vorteilen.

Um aus der wenigstens einen Austreffposition die Abweichung der Lage des ersten Körpers von einer Soll-Lage des ersten Körpers und/oder die Abweichung der Lage des zweiten Körpers von einer Soll-Lage des zweiten Körpers zu erfassen bzw. zu ermitteln, wird bei dem erfindungsgemäßen Verfahren bevorzugt die Abweichung (bzw. Verlagerung) des an der Reflektoranordnung reflektierten Lichtstrahlbündels auf der Streufläche von einer Referenzposition bzw. Sollposition auf der Streufläche ermittelt bzw. erfasst, wobei als Referenzposition bzw. Soll-Position des reflektierten Lichtstrahlbündels die Position des reflektierten Lichtstrahlbündes auf der Streufläche verwendet wird, die sich ergibt, wenn sich der erste Körper in der Soll-Lage des ersten Körpers und sich der zweite Körper in der Soll-Lage des zweiten Körpers befindet. Zum Ermitteln der Referenzposition bzw. Sollposition wird - nachdem die erste Messeinheit an den ersten Körper und die zweite Messeinheit an den zweiten Körper angesetzt wurde - von der Kamera der zweiten Messeinheit mindestens ein Bild der Streufläche aufgenommen, wenn sich der erste Körper in der Soll-Lage des ersten Körpers befindet und wenn sich der zweite Körper in der Soll-Lage des zweiten Körpers befindet und dieses mindestens eine Bild wird ausgewertet, um die Sollposition bzw. Referenzposition auf der Streufläche zu ermitteln bzw. zu erfassen. Sofern sich die Körper noch nicht in ihren Soll-Lagen befinden, werden diese hierfür in ihre Soll-Lagen überführt.

Die Abweichung bzw. Verlagerung kann dabei z.B. in Form von Koordinatendifferenzen angegeben werden, welche die Abweichung der Position des reflektierten Lichtstrahls auf der Streufläche zu der Referenzposition bzw. Soll-Position quantifizieren. Um eine Abweichung des Körpers bzw. der Körper von der bzw. den Solllagen zu erfassen, kann es auch lediglich ausreichend sein, eine Abweichung bzw. Verlagerung der Auftreffposition des an der Reflektoranordnung reflektierten Lichtstrahlbündels auf der Streufläche von der Referenzposition bzw. Sollposition anzuzeigen bzw. auf diese - z.B. durch Ausgeben eines Warnsignals bzw. Hinweissignals - hinzuweisen.

Bei der erfindungsgemäßen Lösung ist ferner vorteilhaft, dass durch die Verwendung einer Kamera und einer Streufläche, welche auf die Kamera abgebildet wird, anstelle der Verwendung eines optischen Detektors, auf welchen das reflektierte Lichtstrahlbündel direkt auftrifft, ein besonders einfaches und flexibles System realisiert werden kann. Insbesondere kann als Kamera ein für Endverbraucher konzipiertes Massenprodukt, wie beispielsweise eine fotografische Kamera oder ein Smartphone, die relativ kostengünstig erhältlich sind oder ohnehin aus anderen Gründen bereits beim Anwender vorhanden sind, verwendet werden.

Bei einer praktischen Ausführungsform weist die Reflektoranordnung eine erste rückwärtige Fläche und eine zweite rückwärtige Fläche auf, die unter einem Winkel zueinander angeordnet sind, um das Lichtstrahlenbündel von der ersten rückwärtigen Fläche zur zweiten rückwärtigen Fläche und von dort in Richtung der Streufläche zu reflektieren.

Vorzugsweise stehen die erste und zweite rückwärtige Fläche der Reflektoranordnung in etwa senkrecht zueinander oder die erste und zweite rückwärtige Fläche der Reflektoranordnung stehen in etwa senkrecht zueinander und die Reflektoranordnung ist als Prisma oder als Porro-Prisma oder als Tripel-Prisma ausgebildet.

Besonders bevorzugt ist eine der ersten Messeinheit zugewandte Fläche der Reflektoranordnung ausgebildet, um einen Teil des Lichtstrahlenbündels zu der Streufläche zu reflektieren und einen Teil des Lichtstrahlenbündels zu der ersten rückwärtigen Fläche zu transmittieren.

Bei einer weiteren praktischen Ausführungsform handelt es sich bei dem Lichtstrahlenbündel um ein erstes Lichtstrahlenbündel und die Mittel zum Erzeugen des ersten Lichtstrahlenbündels sind auch zum Erzeugen eines zweiten Lichtstrahlenbündels ausgebildet, wobei die beiden Lichtstrahlenbündel im wesentlichen in die gleiche Richtung abgestrahlt werden, sich aber spektral unterscheiden, wobei eine der ersten Messeinheit zugewandte Fläche der Reflektoranordnung als Farbteiler und dabei für das erste Lichtstrahlenbündel stärker reflektierend als für das zweite Lichtstrahlenbündel und für das zweite Lichtstrahlenbündel stärker transmittierend als für das erste Lichtstrahlenbündel ausgebildet ist, wobei mindestens eine erste rückwärtige Fläche der Reflektoranordnung vorgesehen ist, um das transmittierende zweite Lichtstrahlenbündel durch die der ersten Messeinheit zugewandten Fläche hindurch zu reflektieren.

Bevorzugt ist eine Dachkante des Prismas im wesentlichen tangential bzgl. der Wellenumfangsflächen orientiert.

Bei einer bevorzugten Ausführungsform ist die Streufläche mit Messmarken versehen und/oder die Streufläche ist mit mehreren über die Streufläche verteilten graphischen Codes (60A, 60B, 60C, 60D) zur Codierung von Daten betreffend die Streufläche versehen und/oder die mit der Streufläche versehenen Messeinheit versehen.

Bevorzugt kann die Kamera ein Objektiv mit fester Brennweite aufweisen.

Im Folgenden werden Ausführungsbeispiele der Erfindung anhand der beigefügten Zeichnung näher erläutert. Dabei zeigen:
- Fig. 1: eine schematische Seitenansicht eines ersten Ausführungsbeispiels einer erfindungsgemäßen Vorrichtung,
- Fig. 2: eine schematische Seitenansicht eines zweiten Ausführungsbeispiels einer erfindungsgemäßen Vorrichtung,
- Fig. 3: eine Frontansicht der Streufläche der Vorrichtung nach Fig. 1 und 2;
- Fig.4: eine perspektivische Ansicht einer ersten Messeinheit eines weiteren Ausführungsbeispiels einer erfindungsgemäßen Vorrichtung ; und
- Fig. 5: ein Beispiel einer mit vier QR-Codes versehenen Streufläche.

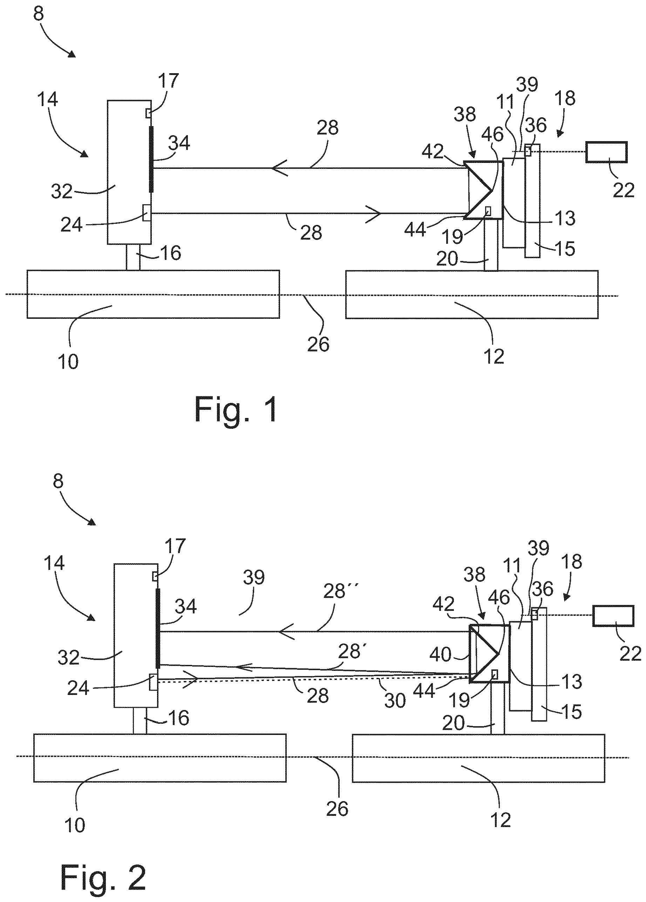

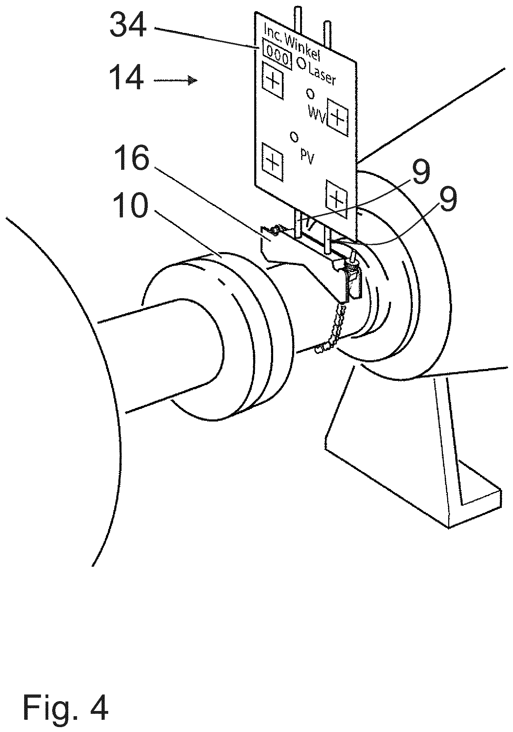

Die Vorrichtung 8 nach Fig. 1 zum Ermitteln der Lage eines ersten Körpers 10 in Form einer Welle 10 und eines zweiten mechanischen Körpers 12 in Form einer Welle 12 zueinander umfasst eine erste Messeinheit 14 zum Ansetzen an den ersten Körper 10, eine zweite Messeinheit 18 zum Ansetzen an den zweiten Körper 12 sowie eine Auswerteeinheit 22. Die erste Messeinheit 14 weist ein Element 16 zum Ansetzen an eine Umfangsfläche der Welle 10 auf und die zweite Messeinheit 18 weist ein Element 20 zum Ansetzen an eine Umfangsfläche der Welle 12 auf. Diese Elemente 16, 20 weisen auch Stangen 9 (vgl. Fig. 4, hier nur für Element 16 veranschaulicht) zur vorteilhaften Höhenverstellbarkeit auf. An diese Stangen 9 ist insbesondere die Reflektoranordnung 38 zur Höhenverstellbarkeit derselben montiert.

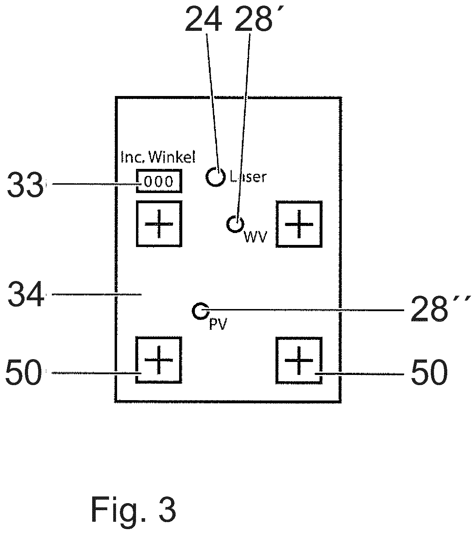

Die erste Messeinheit 14 weist ein Mittel 24 zum Erzeugen eines Lichtstrahlbündels 28 auf, wobei das Mittel 24 in Form einer Lichtquelle 24 zur Erzeugung von Laserlicht ausgebildet ist. Ferner weist die erste Messeinheit 14 eine Streufläche 34 zum Streuen von auf die Streufläche 34 auftreffendem Licht (WV, PV -vgl. auch Fig. 3) auf.

Die zweite Messeinheit 18 weist eine Reflektoranordnung 38 auf, welche der ersten Messeinheit 14 zugewandt ist, wenn die Messeinheiten 14, 18 an das jeweiligen Körper 10, 12 angesetzt sind, um das Lichtstrahlbündel 28 auf die Streufläche 34 zu reflektieren.

Ferner weist die zweite Messeinheit 18 eine Kamera 36 zur Aufnahme von Bildern der Streufläche 34 auf.

Die zweite Messeinheit 18 weist ferner ein Smartphone 15 auf und die Kamera 36 ist an dem Smartphone 15 vorgesehen.

Das Smartphone 15 ist über eine an der Reflektoranordnung 38 befestigte Halterung 11 an der Reflektoranordnung 38 befestigt. Die Halterung 11 ist an einer der Streufläche 34 abgewandten Seite 13 der Reflektoranordnung 38 befestigt. Das Smartphone 15 ist lösbar und schwenkbar an der Halterung 11 befestigt.

Bei dem ersten Körper 10 handelt es sich also um eine erste Welle 10 und bei dem zweiten Körper 12 handelt es sich also um eine zweite Welle 12.

Die erste Messeinheit 14 ist zum Ansetzen an eine Umfangsfläche der ersten Welle 10 und die zweite Messeinheit 18 ist zum Ansetzen an eine Umfangsfläche der zweiten Welle 12 ausgebildet.

Die erste Messeinheit 14 weist ein erstes Inklinometer 17 zum Messen des Drehwinkels einer Drehstellung der ersten Welle 10 auf und die zweite Messeinheit 18 weist ein zweites Inklinometer 19 zum Messen des Drehwinkels einer Drehstellung der zweiten Welle 12 auf. Die Messung des jeweiligen Drehwinkels erfolgt dabei also durch Messung des Neigungswinkels der jeweiligen Messeinheit 14, 18 durch das jeweilige Inklinometer 17, 19. Sofern die Auswerteeinheit 22 in dem Smartphone 15 implementiert bzw. eingebaut ist, werden die Winkelwerte der Inklinometer 17, 19 per Bluetooth an das Smartphone 15 bzw. die Auswerteeinheit 22 gesendet. Durch die Bluetooth-Kommunikation kann auch eine entsprechende App geschützt werden, da ansonsten jeder beliebige Benutzer mit einem Laserpointer und einem Blech die App benutzten könnte, um unberechtigt Messungen durchzuführen. Die App könnte so ausgebildet sein, dass nach Eingabe von Dimensionen die Messung durch Drücken von "START" (eventuell nach Sprachansage) durchgeführt wird.

Die Auswerteeinheit 22 ist ausgebildet, um aus von der Kamera 36 gelieferten Bilddaten wenigstens eine Auftreffposition des an der Reflektoranordnung 38 reflektierten Lichtstrahlbündels 28 auf der Streufläche 34 in unterschiedlichen Drehstellungen der ersten und/oder zweiten Welle 10, 12 zu ermitteln und aus der Auftreffposition eine Abweichung der Lage der ersten Welle 10 von einer Soll-Lage der ersten Welle 10 und eine Abweichung der Lage der zweiten Welle 12 von einer Soll-Lage der zweiten Welle (12) zu erfassen. Wenn sich die Welle10, 12 in ihrer jeweiligen Soll-Lage befinden, sind die Wellen 10, 12 miteinander fluchtend ausgerichtet bzw. in den Soll-Lagen fluchten die Wellen 10, 12 miteinander.

Die Auswerteeinheit 22 ist ferner ausgebildet, um auf der Grundlage der in unterschiedlichen Drehstellungen der ersten und/oder zweiten Welle gemessenen Drehwinkel und auf der Grundlage der Auftreffposition(en) des an der Reflektoranordnung 38 reflektierten Lichtstrahlbündels auf der Streufläche in diesen Drehstellungen den horizontalen Winkelversatz und/oder den vertikalen Winkelversatz und/oder den horizontalen Parallelversatz und/oder den vertikalen Parallelversatz der ersten und/oder zweiten Welle 10, 12 gegenüber der Soll-Lage der ersten und/oder zweiten Welle 10, 12 zu ermitteln.

Die Lichtquelle 24 ist nach oben und unten drehbar montiert (nicht veranschaulicht).

Bei einem Ausführungsbeispiel eines Verfahrens (vgl. Fig. 1) zum Erfassen der Solllagen-Abweichung der beiden Wellen 10, 12 zueinander wird die erste Messeinheit 14 an die erste Welle 10 angesetzt und die zweite Messeinheit 18 wird an die zweite Welle 12 angesetzt. Ferner wird mittels der ersten Messeinheit 14 ein Lichtstrahlbündel 28 erzeugt, mittels der Reflektoranordnung 38 der zweiten Messeinheit 18 wird das Lichtstrahlbündel 28 auf eine Streufläche 34 der ersten Messeinheit 14 reflektiert, von der Kamera 36 der zweiten Messeinheit 18 wird mindestens ein Bild der Streufläche 34 aufgenommen, und das mindestens eine Bild wird ausgewertet, um wenigstens eine Auftreffposition (WV, PV) des an der Reflektoranordnung reflektierten Lichtstrahlbündels auf der Streufläche34 zu ermitteln und daraus eine Abweichung der Lage des ersten Körpers von einer Soll-Lage des ersten Körpers und eine Abweichung der Lage des zweiten Körpers von einer Soll-Lage des zweiten Körpers zu erfassen.

Insbesondere können auch in unterschiedlichen Drehstellungen der Wellen 10, 12 Bilder der Streufläche 34 aufgenommen und diese Bilder ausgewertet werden, um die Auftreffposition des an der Reflektoranordnung 38 reflektierten Lichtstrahlbündels 28 auf der Streufläche 34 in diesen unterschiedlichen Drehstellungen zu ermitteln und daraus in Verbindung mit den durch die Inklinometer 17, 19 gemessenen Drehwinkel der unterschiedlichen Drehstellungen den horizontalen Winkelversatz und/oder den vertikalen Winkelversatz und/oder den horizontalen Parallelversatz und/oder den vertikalen Parallelversatz der ersten und zweiten Welle gegenüber der Soll-Lage der ersten und/oder zweiten Welle 10, 12 zu ermitteln.

Je nach Smartphone und Kameraoptik muss ein Mindestabstand zwischen der Streufläche 34 und der Kamera 36 eingehalten werden, damit die Kamera 36 richtig fokussiert werden kann,. Dieser Abstand kann groß sein.

Die optische Achse 39 der Kamera 36 ist in dem Zustand, in welchem die Messeinheiten 14, 18 an die Wellen 10, 12 angesetzt sind, rechtwinkelig bzw. im wesentlichen rechtwinkelig zur Streufläche 34 ausgerichtet.

Die beiden Wellen 10 und 12 sind in den Soll-Lagen (Solllagen) fluchtend bzw. möglichst fluchtend hintereinander bezüglich einer Referenzachse 26 angeordnet, wobei die Vorrichtung 8 mit den beiden Messeinheiten 14, 18 insbesondere dazu dient, einen eventuellen horizontalen Winkelversatz und/oder vertikalen Winkelversatz und/oder horizontalen Parallelversatz und/oder vertikalen Parallelversatz bezüglich der Referenzachse 26 zu erfassen bzw. zu ermitteln. Die Vorrichtung umfasst typischerweise auch Mittel zum Anzeigen des Ergebnisses insbesondere bezüglich Winkelversatz bzw. Parallelversatz (in den Figuren nicht dargestellt).

Die erste Messeinheit 14 umfasst neben der Lichtquelle 24 zum Erzeugen des Lichtstrahlenbündels 28 auch einen Kollimator (nicht dargestellt) zum Kollimieren des Lichtstrahlenbündels 28.

Die Kamera 36 weist eine Optik (nicht dargestellt) auf, um die Streufläche 34 auf einen Kamerasensor (nicht dargestellt) abzubilden. Die Streufläche 34 ist der zweiten Messeinheit 18 zugewandt, wenn sich die beiden Messeinheiten 14, 18 in einer Messposition befinden. Die Lichtquelle 24 kann auch (hier nicht veranschaulicht) von der zweiten Messeinheit 18 aus gesehen hinter der Streufläche 34 angeordnet sein und das Lichtstrahlbündel 28 durch eine entsprechende Öffnung in der Streufläche 34 abstrahlen.

Die Reflektoranordnung 38 weist eine erste rückwärtige Fläche 42 sowie eine zweite rückwärtige Fläche 44 aufweist, wobei die rückwärtigen Flächen 42, 44 unter einem Winkel, typischerweise einem rechten Winkel zueinander angeordnet sind und dabei eine Dachkante 46 zwischen sich bilden; in den gezeigten Beispielen ist die Reflektoranordnung als so genanntes Porro-Prisma (auch als "Dachkantprisma" bezeichnet) ausgebildet, wobei die beiden parallelen Seitenflächen des Prismas von kongruenten rechtwinkligen Dreiecken gebildet werden, die von zu den Dreiecksflächen senkrecht stehenden Begrenzungsflächen verbunden werden. Die Dachkante 46 steht dabei im Wesentlichen tangential zu den Umfangsflächen der Wellen 10, 12.

Hinter der Streufläche 34 (von der zweiten Messeinheit 18 aus gesehen) weist die erste Messeinheit 14 ein Gehäuse 32 auf, welches die Lichtquelle 24 und die zugehörige Elektronik enthält. Die Lichtquelle 24 ist vorzugsweise zufällig ("randomized") gepulst, um die Schwingungsanfälligkeit gering zu halten. Ferner enthält das Gehäuse 32 die Stromquelle (Batterien oder Akkus) für die Lichtquelle 24, nebst geeigneter Power-Management- Elektronik. Insgesamt sollte das Gehäuse 32 nicht wesentlich dicker als die typischerweise zur Anbindung an das Ansetzelement 16 vorgesehenen Haltestangen 9 (vgl. Fig. 4) sein.

Das Inklinometer 17 mit einer Anzeige 33 (vgl. Fig. 3) kann beispielsweise in das Gehäuse 32 integriert sein, siehe Fig. 1 und 2. Das Inklinometer 17 kann dabei beispielsweise als MEMS-Inklinometer ausgebildet sein.

Die erste Messeinheit 14 ist vorzugsweise so ausgebildet, dass das bzw. die Lichtstrahlenbündel 28, 30 direkt ohne Zwischenschaltung eines reflektierenden Elements auf die Reflektoranordnung 38 der zweiten Messeinheit 18 gerichtet werden, d.h. zwischen der Lichtquelle 24 und der Reflektoranordnung 38 sind keine reflektierenden Elemente angeordnet.

Das Ausführungsbeispiel nach Fig. 2 unterscheidet sich von dem Ausführungsbeispiel nach Fig. 1 dadurch , dass die Reflektoranordnung 38 eine Frontfläche 40 aufweist. Diese Frontfläche 40 ist als teilreflektierende Fläche für das Strahlenbündel 28 ausgebildet, wobei ein erster Teil 28' des Strahlenbündels von der Frontfläche 40 in Richtung der Streufläche 34 reflektiert wird, während ein zweiter Teil 28" des Strahlenbündels 28 durch die Frontfläche 40 hindurch in Richtung der zweiten rückwärtigen Fläche 44 transmittiert wird, um an der zweiten rückwärtigen Fläche 44 zur ersten rückwärtigen Fläche 42 hin reflektiert zu werden und von dort durch die Frontfläche 40 hindurch in Richtung der Streufläche 34 reflektiert zu werden.

In den Ausführungsbeispielen sind die Auftreffpunkte (d.h. die Lichtflecke) des Lichtstrahlbündels 28' bzw. 28" auf der Streufläche 34 mit WV bzw. PV bezeichnet. Vorzugsweise wird die Reflektivität der Frontfläche 40 für das Lichtstrahlbündel 28 so gewählt, dass sich die Intensitäten der beiden reflektierten Lichtstrahlbündel 28' bzw. 28" unterscheiden, wodurch die beiden AuftreffPunkte WV bzw. PV auf der Streufläche 34 unterschieden werden können.

Gemäß einer abgewandelten Ausführungsform kann die Anordnung nach Fig. 2 mit einer Lichtquelle 24 ausgestattet sein, welche zusätzlich zu dem ersten Lichtstrahlenbündel 28 ein zweites Lichtstrahlenbündel 30 (in Fig. 2 gestrichelt dargestellt) abgeben kann, wobei die beiden Lichtstrahlenbündel 28, 30 im Wesentlichen in die gleiche Richtung abgestrahlt werden, sich jedoch spektral unterscheiden (beispielsweise kann die Lichtquelle 24 als Dual- Wave-Laserdiode ausgebildet sein, die ein Lichtstrahlbündel bei etwa 660 nm im roten Bereich und ein Lichtstrahlbündel bei etwa 780 nm im infraroten Bereich abgibt; alternativ kann die Lichtquelle 24 auch zwei verschiedenfarbige Laserdioden aufweisen).

In diesem Fall ist die Frontfläche 40 der Reflektoranordnung 38 als Farbteiler ausgebildet, wobei sie beispielsweise für das erste Lichtstrahlbündel 28 stärker reflektierend als für das zweite Lichtstrahlbündel 30 und entsprechend für das zweite Lichtstrahlbündel 30 stärker transmittierend als für das erste Lichtstrahlbündel 28 ausgebildet sein kann. Das in Fig. 2 mit 28" bezeichnete reflektierte Lichtstrahlbündel entspricht dann dem zweiten Lichtstrahlbündel 30, nachdem es von der Frontfläche 40 transmittiert und von den beiden rückwärtigen Flächen 42, 44 reflektiert wurde. Das in Fig. 2 mit 28' bezeichnete Lichtstrahlbündel entspricht dann dem an der Frontfläche 40 reflektierten ersten Lichtstrahlbündel 28.

Auf diese Weise unterscheiden sich die beiden Auftreffpunkte WV bzw. PV durch ihre spektrale Zusammensetzung und können mittels einer farbempfindlichen Kamera 36 leicht unterschieden werden.

Bei der in Fig. 2 gezeigten Anordnung ist der Auftreffpunkt WV (vgl. Fig. 3) des an der Frontfläche 40 reflektierten Strahlenbündels 28' ein Maß für den Winkelversatz der beiden Wellen 10, 12, und der Auftreffpunkt PV des an den beiden rückseitigen Flächen 42, 44 reflektierten Strahlenbündels 28" ist ein Maß für den Parallelversatz der beiden Wellen 10, 12.

Die Streufläche 34 (vgl. Fig. 3) ist mit Messmarkierungen 50 versehen, die beispielsweise als Kreuze ausgebildet sein können, um die Auswertung der von der Kamera 36 aufgenommenen Bilder der Streufläche 34 zu erleichtern. Damit die Markierungen 50 auch in dunkler Umgebung sichtbar sind, kann beispielsweise eine externe Lichtquelle vorgesehen sein, z.B. eine LED (nicht dargestellt). Eine LED umfassende externe Lichtquelle zur Beleuchtung der Streufläche 34 kann insbesondere auch an dem Smartphone 15 vorgesehen sein. Alternativ könnte eine Hintergrundbeleuchtung (nicht dargestellt) der Streufläche 34 vorgesehen sein. Dabei könnte z.B. eine Metallfolie mit entsprechenden Ausschnitten auf eine Milchglasfläche (aus Glas oder Kunststoff) geklebt sein, wobei dann über das Gehäuse 32 diffuses weißes Licht eingekoppelt wird. Vorzugsweise ist die Streufläche 34 eben bzw. im wesentlichen eben ausgebildet.

Die Streufläche 34 kann zurückversetzt sein (nicht veranschaulicht), um eine bessere Verlagerung des Gewichts für eine Spannvorrichtung (vgl. auch Fig. 4) zu ermöglichen. Ferner ist eine Platine (nicht dargestellt) mit einem Loch für einen Helligkeitssensor (ganz unten - nicht dargestellt) und Bluetooth vorgesehen. Der Helligkeitssensor wird für die Anpassung der Laserleistung an die Umgebungshelligkeit verwendet.

Die Kamera 36 ist bei den Vorrichtungen nach Fig. 1 und 2 so ausgerichtet bzw. eingerichtet, dass sie die Streufläche 34 vollständig bzw. möglichst vollständig auf dem Kamerasensor abbildet.

Vorzugsweise weist die Optik der Kamera 36 ein Festobjektiv auf. Alternativ kann die Kamera 36 des Smartphones 15 auch ein Zoomobjektiv aufweisen. Vorzugsweise liegt die Auflösung des Kamerasensors bei mindestens 8 Megapixel. Die Kamera wird vorzugsweise im Makrobereich betrieben.

Da die Kamera 36 als Smartphone 15 ausgebildet ist bzw. die Kamera 36 die Kamera 36 eines Smartphones 15 ist, kann die Anzeige des Smartphones vorteilhafterweise als graphische Benutzeroberfläche (GUI) verwendet werden; ansonsten könnte ein zusätzliches Gerät in dieser Art, wie beispielsweise ein Smartphone oder ein Tablet-Computer, zusätzlich zur Bedienerführung verwendet werden. Dabei kann beispielsweise auch eine Sprachsteuerung mit Headset oder eine "Google-Brille ("GLASS") eingesetzt werden.

Die Kamera 36 der Vorrichtungen nach Fig. 1 und 2 ist vorzugsweise mit einer OCR-Funktion versehen, um den Wert des Neigungswinkels, der über die Anzeige des Inklinometers 17 bzw. 19 angezeigt wird, zu erfassen; alternativ kann eine Übertragung des Winkelwerts direkt zur Kamera 36 erfolgen, beispielsweise über eine Bluetooth-Strecke.

Da es sich bei der Kamera 36 um die Kamera 16 eines Smartphones 15 handelt, kann auch das darin üblicherweise integrierte Inklinometer für die Bestimmung des Neigungswinkels verwendet werden.

Bei der Auswertung der von der Kamera 36 aufgenommenen Bilder kann beispielsweise auch eine Korrektur von systematischen Abbildungsfehlern, wie sie beispielsweise durch die Prismenkante 46 verursacht werden können, erfolgen.

Die Auswertung der Bilder erfolgt in der schematisch angedeuteten Auswerteeinheit 22, die ein Teil der Kamera bilden kann, insbesondere wenn die Kamera 36 an dem Smartphone 15 vorgesehen ist, das ja ohnehin bereits von Haus aus mit einer relativ großen Rechenleistung ausgestattet ist.

Vor Beginn einer Messung mittels der Vorrichtung nach Fig. 2 werden die beiden Messeinheiten 14, 18 zunächst relativ zueinander justiert, so dass die reflektierten Lichtstrahlbündel 28', 28" in etwa in der Mitte der Streufläche 34 auftreffen (in Fig. 2 nicht veranschaulicht). Zu diesem Zweck kann beispielsweise die zweite Messeinheit 18 mit einer Höhenverstellung (nicht gezeigt) zum Verstellen der Position der zweiten Messeinheit 18 in radialer Richtung bezüglich der Welle 12 und einer Winkelverstellung zwecks Verkippung der zweiten Messeinheit 18 bezüglich der radialen Richtung der Welle 12 und einer Verstellung der zweiten Messeinheit 18 um die radiale Richtung versehen sein.

Nach erfolgter Justierung der beiden Messeinheiten 14, 18 zueinander zeigen die Auftreffpositionen der reflektierten Strahlenbündel 28', 28" im Prinzip die Fehlausrichtung der beiden Wellen 10 und 12 zueinander an, wenn die beiden Wellen 10 und 12 gemeinsam mit den darauf befindlichen Messeinheiten 14, 18 um die Achse 26 gedreht werden, wobei dann der Verlauf des jeweiligen Auftreffpunkts in Abhängigkeit vom Drehwinkel (der wiederum mittels der Inklinometerfunktion bestimmt werden kann) verfolgt und in an sich bekannter Weise ausgewertet werden kann, um den horizontalen Winkelversatz und/oder den vertikalen Winkelversatz und/oder den horizontalen Parallelversatz und/oder den vertikalen Parallelversatz der Wellen 10, 12, insbesondere gegenüber der Soll-Lage der ersten und zweiten Welle 10, 12, zu ermitteln (ein solches Verfahren ist beispielsweise in der DE 39 11 307 A1 für ein einzelnes Strahlenbündel beschrieben).

Falls die Reflektoranordnung 38 bei der Vorrichtung nach Fig. 2 als Tripelprisma ausgebildet ist, gibt die Auftreffposition des an den rückwärtigen Flächen 42, 44 reflektierten Strahlenbündels 28" den Parallelversatz in beiden Richtungen an.

Nach Ermittlung der Fehlausrichtung bzw. Solllagen-Abweichungen wird in einer bestimmten Winkelposition eine Justierung der Wellen 10, 12 vorgenommen, wobei während der Wellenjustierung gemessen wird, um festzustellen, wann die Fehlausrichtung am besten korrigiert ist. Ein solches Verfahren ist beispielsweise ebenfalls in der DE 39 11 307 A1 beschrieben.

Bei Verwendung eines Tripelprismas kann die Justierung der Wellen beispielsweise in der"0 Uhr"-Position der beiden Messeirrheilen 14, 18 erfolgen. Bei Verwendung eines Porro- Prismas (auch als "Dachkantprisma" bezeichnet) kann die Justierung beispielsweise in der 3 Uhr- oder 9 Uhr-Position erfolgen.

Typischerweise sind während der Ausrichtungsmessung und während der Justierung der Wellen kontinuierlich in relativer hoher Rate von der Kamera Bilder der Streufläche 34 zu aufzunehmen und auszuwerten, wobei beispielsweise fünf Bilder pro Sekunde erstellt und verarbeitet werden können. Da es sich bei der Kamera um ein Smartphone handelt bzw. die Kamera die Kamera eines Smartphones ist, kann die Bilderstellung und Auswertung beispielsweise in Form einer geeigneten App (vgl. auch oben) erfolgen.

Als Alternative zu einer kontinuierlichen Bildaufnahme kann der Aufnahmemodus beispielsweise auch so gewählt werden, dass die Bilderstellung in Abhängigkeit vom aktuellen Inklinationswinkel erfolgt, z.B. immer, wenn sich der Winkel um einen bestimmten Betrag, z.B.1°, ändert.

Die Vorrichtungen nach den Fig. 1 und 2 können optional ein Bluetooth-Headset umfassen, welches von der mit der Justierung der Wellen befassten Bedienperson während der Justierung getragen wird und welches dazu dient, die aktuell von der Auswerteeinheit 22 ermittelten Versatzwerte drahtlos zu empfangen, um sie der Justierung der Wellen befassten Person akustisch darzubieten. Dies ist insofern vorteilhaft, als es typischerweise während der Justierung für die Bedienperson schwierig ist, die Anzeige des Smartphones 15 abzulesen. Dabei könnte das Headset auch verwendet werden, um die Bluetooth-Verbindung für eine Sprachsteuerung des Smartphones 15 zu nutzen.

Alternativ könnte von der Bedienperson ein zweites Smartphone oder ein Tablet-Computer verwendet werden, um die Anzeige des als Kamera dienenden Smartphones 15 über eine Bluetooth-Verbindung (z.B. mittels VNC) in einer für die Bedienperson besser ablesbaren Weise darzustellen, wobei auch mittels Bildschirmberührung das Smartphone 15 über das zweite Smartphone oder den Tablet-Computer gesteuert werden könnte, s. auch WO 97/36146.

Typischerweise hat die abgebildete Fläche eine Größe von etwa 40 x 40 mm; dann entspricht ein Pixel etwa 20 µm, wenn die Auflösung der Kamera bei 8 Megapixel (entsprechend einer vertikalen Auflösung von etwa 2500 Pixel) liegt. Wenn alternativ eine Kompaktkamera mit beispielsweise 16 Megapixel verwendet wird, kann eine Auflösung von etwa 7 µm erzielt werden.

Grundsätzlich kann alternativ auch eine Kamera mit spezieller Optik verwendet werden, oder im Falle des hier eingesetzten Smartphones kann eine Lupe vorgeschaltet werden. Die abzubildenden Abmessungen der Streufläche 34 können beispielsweise auch auf 20 x 20 mm bis 30 x 30 mm reduziert werden.

Dabei ist grundsätzlich vorstellbar, dass die Bilder von der Kamera 36 drahtlos (beispielsweise per WLAN) beispielsweise an eine mobile Plattform übertragen werden. Dabei kann beispielsweise eine spezielle SD-Karte verwendet werden.

Grundsätzlich bietet die Verwendung von Smartphones als Kamera viele Vorteile: So sind solche Geräte sehr flexibel und leistungsfähig bezüglich der Programmierung und Gestaltung der graphischen Benutzeroberfläche; insbesondere sind auch Dinge wie Gestenerkennung, Tastatureinblendung und Lokalisierung möglich. Ferner kann der mit der Ausrichtungsmessung befasste Benutzer ein Gerät verwenden, mit dessen Bedienung er ohnehin grundsätzlich vertraut ist. Außerdem bieten Smartphones viele Schnittstellen, z.B. auch in einer Instandhalterdatenbank; insbesondere sind dabei drahtlose Schnittstellen verfügbar, die für die Anbindung an eine weitere mobile Bedienplattform, ein Headset (mit Echo- und Geräuschunterdrückung), eine Google-Brille, ein Vibrationsgürtel etc., verwendet werden können. Ferner kann das Smartphone während Zeiten, wenn es nicht für Ausrichtungsmessungen verwendet wird, in der üblichen Weise verwendet werden.

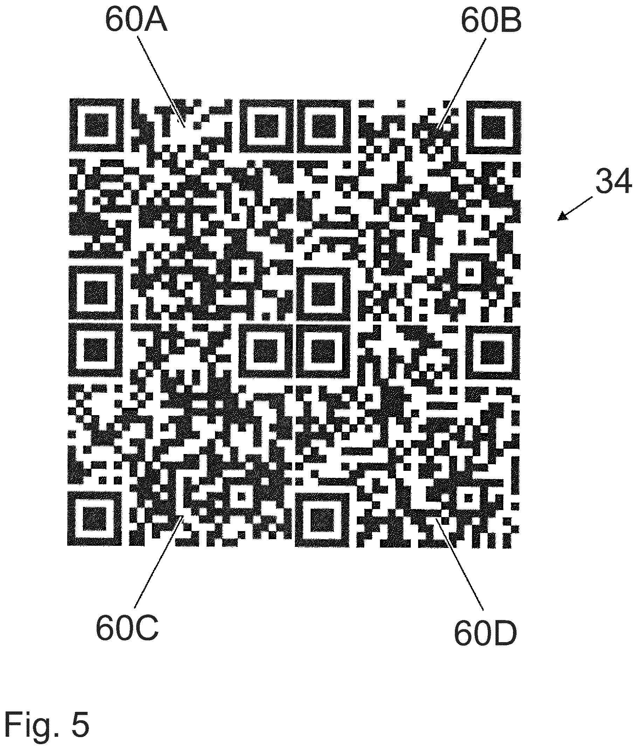

Gemäß einer Ausführungsform der Erfindung kann die Streufläche 34 mit mehreren, typischerweise nach Art eines Rasters über die Streufläche verteilten, zweidimensionalen optischen Codes, z.B. eines QR-Codes, versehen sein, welche auf die Streufläche aufgedruckt sind und zur Codierung von Informationen/Daten bzgl. der Streufläche bzw. der mit der Streufläche versehenen Messeinheit dienen, beispielsweise Seriennummer der Messeinheit, Abmessungen der Streufläche in x-und y-Richtung (z.B. in mm), Korrekturfaktoren bzgl. der Genauigkeit bzw. Fehlern des beim Aufdruck der Streufläche verwendeten Druckers (z.B. Betrag der Streckung oder Stauchung in x- und y-Richtung), Anzahl der Codes auf der Streufläche, Position des jeweiligen Codes im Raster (Nummer der Zeile, Nummer der Spalte), sowie Abstand der des jeweiligen Codes vom Ursprung des Koordinatensystems der Streufläche (z.B. in µm). Die einzelnen Codes können dabei beispielsweise so angeordnet sein, dass sie aneinander angrenzen, um die gesamte Streufläche abzudecken, s. z.B. Fig. 5, wo vier Codes 60A, 60B, 60C, 60D gezeigt sind. Die Anzahl und Auflösung der Codes sollte entsprechend der Auflösung des Druckers und der Kamera optimiert werden. Statt eines QR- Codes können grundsätzlich auch andere proprietäre graphische Codes verwendet werden.

Das Vorsehen von graphischen Codes auf der Streufläche 34 hat folgende Vorteile: Es muss nicht die gesamte Reflektorfläche mit Sicherheitsrand fotografiert werden, was eine Erleichterung für den Anwender bedeutet. Die Code können zwecks Erstellung eines Sollbilds rekonstruiert werden, so dass genügend Punkte für die Linearisierung des Bildes des Streufläche (innere und äußere Parameter) vorhanden sind. Anhand von bestimmten Marken können die Codes auf der Streufläche als solche identifiziert werden. Es kann eine höhere Genauigkeit bei der Ermittlung der Auftreffposition erzielt werden. Die Streufläche kann bzgl. der Genauigkeit des beim Aufdrucken der Streufläche verwendeten Druckers korrigiert werden.

## Patentansprüche

1. Vorrichtung (8) zum Erfassen einer Solllagen-Abweichung zweier Körper (10, 12), mit einer ersten Messeinheit (14) zum Ansetzen an den ersten Körper (10), einer zweiten Messeinheit (18) zum Ansetzen an den zweiten Körper (12), sowie einer Auswerteeinheit (22),
wobei die erste Messeinheit (14) Mittel (24) zum Erzeugen mindestens eines Lichtstrahlbündels (28) und eine Streufläche (34) zum Streuen von auf die Streufläche auftreffendem Licht (WV, PV) aufweist,
wobei die zweite Messeinheit (18) eine Reflektoranordnung (38) aufweist, welche der ersten Messeinheit (14) zugewandt ist, wenn die Messeinheiten (14, 18) an den jeweiligen Körper (10, 12) angesetzt sind, um das Lichtstrahlbündel (28) auf die Streufläche (34) zu reflektieren, und wobei die zweite Messeinheit (18) eine Kamera (36) zur Aufnahme von Bildern der Streufläche (34) aufweist,
wobei die Auswerteeinheit (22) ausgebildet ist, um aus von der Kamera (36) gelieferten Bilddaten wenigstens eine Auftreffposition des an der Reflektoranordnung (38) reflektierten Lichtstrahlbündels (28) auf der Streufläche (34) zu ermitteln und aus der Auftreffposition eine Abweichung der Lage des ersten Körpers (10) von einer Soll-Lage des ersten Körpers (10, 12) und eine Abweichung der Lage des zweiten Körpers (12) von einer Soll-Lage des zweiten Körpers (12) zu erfassen.

2. Vorrichtung nach Anspruch 1, **dadurch gekennzeichnet, dass** die Kamera (36) lösbar an der Reflektoranordnung (38) befestigt ist.

3. Vorrichtung nach Anspruch 2, **dadurch gekennzeichnet, dass** die Kamera (36) über eine an der Reflektoranordnung (38) befestigte Halterung lösbar an der Reflektoranordnung (38) befestigt ist, wobei die Halterung an einer der Streufläche (34) abgewandten Seite der Reflektoranordnung (38) befestigt ist.

4. Vorrichtung nach Anspruch 1, **dadurch gekennzeichnet, dass** die zweite Messeinheit (18) ein Smartphone (15) aufweist, wobei die Kamera (36) an dem Smartphone (15) vorgesehen ist.

5. Vorrichtung nach Anspruch 4, **dadurch gekennzeichnet, dass** das Smartphone (15) über eine an der Reflektoranordnung (38) befestigte Halterung (11) an der Reflektoranordnung (38) befestigt ist, wobei die Halterung (11) an einer der Streufläche (34) abgewandten Seite (13) der Reflektoranordnung (38) befestigt ist.

6. Vorrichtung nach Anspruch 5, **dadurch gekennzeichnet, dass** das Smartphone (15) lösbar an der Halterung (11) befestigt ist

7. Vorrichtung nach Anspruch 5, **dadurch gekennzeichnet, dass** das Smartphone (15) lösbar und schenkbar an der Halterung (11) befestigt ist.

8. Vorrichtung nach einem der Ansprüche 4 bis 7, **dadurch gekennzeichnet, dass** das Smartphone (15) die Auswerteinheit (22) aufweist.

9. Vorrichtung nach einem der vorangehenden Ansprüche, **dadurch gekennzeichnet, dass** es sich bei dem ersten Körper (10) um eine erste Welle (10) und bei dem zweiten Körper (12) um eine zweite Welle (12) handelt, wobei die erste Messeinheit (14) zum Ansetzen an eine Umfangsfläche der ersten Welle (10) und die zweite Messeinheit (18) zum Ansetzen an eine Umfangsfläche der zweiten Welle (12) ausgebildet sind, wobei die Vorrichtung wenigstens ein Inklinometer (17, 19) zum Messen des Drehwinkels einer Drehstellung der ersten Welle (10) und/oder der zweiten Welle (12) aufweist, wobei die Auswerteeinheit (22) ausgebildet ist, um auf der Grundlage der in unterschiedlichen Drehstellungen der ersten und/oder zweiten Welle (10, 12) gemessenen Drehwinkel und auf der Grundlage der Auftreffposition des an der Reflektoranordnung (38) reflektierten Lichtstrahlbündels auf der Streufläche (34) in diesen Drehstellungen den horizontalen Winkelversatz und/oder den vertikalen Winkelversatz und/oder den horizontalen Parallelversatz und/oder den vertikalen Parallelversatz der ersten und zweiten Welle gegenüber einer Soll-Lage der ersten und zweiten Welle (10, 12) zu ermitteln.

10. Verfahren zum Erfassen einer Solllagen-Abweichung zweier Körper (10, 12), wobei
eine erste Messeinheit (14) an einen ersten Körper (10) der beiden Körper (10, 12) angesetzt wird und eine zweite Messeinheit (18) an einen zweiten Körper (12) der beiden Körper (10, 12) angesetzt wird,
mittels der ersten Messeinheit (14) ein Lichtstrahlbündel (28) erzeugt wird,
mittels einer Reflektoranordnung (38) der zweiten Messeinheit (18) das Lichtstrahlbündel (28) auf eine Streufläche (34) der ersten Messeinheit (14) reflektiert wird,
von einer Kamera (36) der zweiten Messeinheit (18) mindestens ein Bild der Streufläche (34) aufgenommen wird, und
das mindestens eine Bild ausgewertet wird, um wenigstens eine Auftreffposition (WV, PV) des an der Reflektoranordnung reflektierten Lichtstrahlbündels auf der Streufläche (34) zu ermitteln und daraus eine Abweichung der Lage des ersten Körpers von einer Soll-Lage des ersten Körpers und eine Abweichung der Lage des zweiten Körpers von einer Soll-Lage des zweiten Körpers zu erfassen.

## Claims

1. Apparatus (8) for acquiring a predetermined-position deviation of two bodies (10, 12), having a first measurement unit (14) for placement at the first body (10), a second measurement unit (18) for placement at the second body (12), and an evaluation unit (22),
wherein the first measurement unit (14) has means (24) for generating at least one light beam (28) and a scattering surface (34) for scattering light (WV, PV) that is incident on the scattering surface,
wherein the second measurement unit (18) has a reflector arrangement (38), which faces the first measurement unit (14) if the measurement units (14, 18) are placed at the respective body (10, 12), in order to reflect the light beam (28) onto the scattering surface (34), and wherein the second measurement unit (18) has a camera (36) for recording images of the scattering surface (34),
wherein the evaluation unit (22) is configured to ascertain, from image data supplied by the camera (36), at least one incidence position of the light beam (28), which is reflected at the reflector arrangement (38), on the scattering surface (34) and to acquire, from the incidence position, a deviation of the position of the first body (10) from a predetermined position of the first body (10, 12), and a deviation of the position of the second body (12) from a predetermined position of the second body (12).

2. Apparatus according to Claim 1, **characterized in that** the camera (36) is detachably mounted to the reflector arrangement (38).

3. Apparatus according to Claim 2, **characterized in that** the camera (36) is detachably mounted to the reflector arrangement (38) via a holder which is mounted to the reflector arrangement (38), wherein the holder is mounted to a side of the reflector arrangement (38) that is remote from the scattering surface (34).

4. Apparatus according to Claim 1, **characterized in that** the second measurement unit (18) has a smart phone (15), wherein the camera (36) is provided on the smart phone (15).

5. Apparatus according to Claim 4, **characterized in that** the smart phone (15) is mounted to the reflector arrangement (38) via a holder (11) which is mounted to the reflector arrangement (38), wherein the holder (11) is mounted to a side (13) of the reflector arrangement (38) that is remote from the scattering surface (34).

6. Apparatus according to Claim 5, **characterized in that** the smart phone (15) is detachably mounted to the holder (11).

7. Apparatus according to Claim 5, **characterized in that** the smart phone (15) is detachably and pivotably mounted to the holder (11).

8. Apparatus according to one of Claims 4 to 7, **characterized in that** the smart phone (15) has the evaluation unit (22).

9. Apparatus according to one of the preceding claims, **characterized in that** the first body (10) is a first shaft (10), and the second body (12) is a second shaft (12), wherein the first measurement unit (14) is configured for being placed at a circumferential surface of the first shaft (10), and the second measurement unit (18) is configured for being placed at a circumferential surface of the second shaft (12), wherein the apparatus has at least one inclinometer (17, 19) for measuring the rotation angle of a rotational position of the first shaft (10) and/or of the second shaft (12), wherein the evaluation unit (22) is configured to ascertain, on the basis of the rotation angle measured in various rotational positions of the first and/or second shaft (10, 12) and on the basis of the incidence position of the light beam, which is reflected at the reflector arrangement (38), on the scattering surface (34) in these rotational positions, the horizontal angle offset and/or the vertical angle offset and/or the horizontal parallel offset and/or the vertical parallel offset of the first and second shafts with respect to a predetermined position of the first and second shafts (10, 12).

10. Method for acquiring a predetermined-position deviation of two bodies (10, 12), wherein
a first measurement unit (14) is placed at a first body (10) of the two bodies (10, 12), and a second measurement unit (18) is placed at a second body (12) of the two bodies (10, 12),
a light beam (28) is generated using the first measurement unit (14),
the light beam (28) is reflected onto a scattering surface (34) of the first measurement unit (14) using a reflector arrangement (38) of the second measurement unit (18),
at least one image of the scattering surface (34) is recorded by a camera (36) of the second measurement unit (18), and
the at least one image is evaluated to ascertain at least one incidence position (WV, PV) of the light beam, which is reflected at the reflector arrangement, on the scattering surface (34) and to acquire therefrom a deviation of the position of the first body from a predetermined position of the first body, and a deviation of the position of the second body from a predetermined position of the second body.

## Revendications

1. Dispositif (8) de détection d'un écart de positions nominales de deux corps (10, 12), comportant une première unité de mesure (14) destinée à être montée sur le premier corps (10), une deuxième unité de mesure (18) destinée à être montée sur le deuxième corps (12), ainsi qu'une unité d'évaluation (22),
dans lequel la première unité de mesure (14) comporte des moyens (24) destinés à générer au moins un faisceau de rayons lumineux (28) et une surface diffusante (34) destinée à diffuser la lumière (WV, PV) incidente sur la surface diffusante,
dans lequel la deuxième unité de mesure (18) comporte un système réflecteur (38) qui est tourné vers la première unité de mesure (14), lorsque les unités de mesure (14, 18) sont montées sur les corps (10, 12) respectifs, afin de réfléchir le faisceau de rayons lumineux (28) vers la surface diffusante (34), et dans lequel la deuxième unité de mesure (18) comporte une caméra (36) destinée à acquérir des images de la surface diffusante (34),
dans lequel l'unité d'évaluation (22) est conçue pour déterminer, à partir des données d'image délivrées par la caméra (36), au moins une position d'incidence du faisceau de rayons lumineux (28) réfléchi par le système réflecteur (38) vers la surface diffusante (34) et pour détecter, à partir de la position d'incidence, un écart de position du premier corps (10) par rapport à une position nominale du premier corps (10, 12) et un écart de position du deuxième corps (12) par rapport à une position nominale du deuxième corps (12).

2. Dispositif selon la revendication 1, **caractérisé en ce que** la caméra (36) est fixée de manière amovible au système réflecteur (38).

3. Dispositif selon la revendication 2, **caractérisé en ce que** la caméra (36) est fixée de manière amovible au système réflecteur (38) par l'intermédiaire d'un support fixé au système réflecteur (38), dans lequel le support est fixé à un côté du système réflecteur (38) qui est tourné à l'opposé de la surface réfléchissante (34).

4. Dispositif selon la revendication 1, **caractérisé en ce que** la deuxième unité de mesure (18) comporte un téléphone intelligent (15), dans lequel la caméra (36) est prévue sur le téléphone intelligent (15).

5. Dispositif selon la revendication 4, **caractérisé en ce que** le téléphone intelligent (15) est fixé au système réflecteur (38) par l'intermédiaire d'un support (11) fixé au système réflecteur (38) dans lequel le support (11) est fixé à un côté (13) du système réflecteur (38) qui est tourné en sens opposé à la surface diffusante (34).

6. Dispositif selon la revendication 5, **caractérisé en ce que** le téléphone intelligent (15) est fixé de manière amovible au support (11).

7. Dispositif selon la revendication 5, **caractérisé en ce que** le téléphone intelligent (15) est fixé de manière amovible et pivotante au support (11).

8. Dispositif selon l'une quelconque des revendications 4 à 7, **caractérisé en ce que** le téléphone intelligent (15) comporte l'unité d'évaluation (22).

9. Dispositif selon l'une quelconque des revendications précédentes, **caractérisé en ce que** le premier corps (10) est un premier arbre (10) et **en ce que** le deuxième corps (12) est un deuxième arbre (12), dans lequel la première unité de mesure (14) est conçue pour être montée sur une surface circonférentielle du premier arbre (10) et la deuxième unité de mesure (18) est conçue pour être montée sur une surface circonférentielle du deuxième arbre (12), dans lequel le dispositif comporte au moins un inclinomètre (17, 19) pour mesurer l'angle de rotation d'une position de rotation du premier arbre (10) et/ou du deuxième arbre (12), dans lequel l'unité d'évaluation (22) est conçue pour déterminer, sur la base de l'angle de rotation mesuré à différentes positions de rotation du premier et/ou du deuxième arbre (10, 12) et sur la base de la position d'incidence du faisceau de rayons lumineux réfléchi par le système réflecteur (38) vers la surface diffusante (34) auxdites positions de rotation, le décalage angulaire horizontal et/ou le décalage angulaire vertical et/ou le décalage parallèle horizontal et/ou le décalage parallèle vertical des premier et deuxième arbres par rapport à une position nominale des premier et deuxième arbres (10, 12).

10. Procédé de détection d'un écart de positions nominales de deux corps (10, 12), dans lequel une première unité de mesure (14) est montée sur un premier corps (10) des deux corps (10, 12) et une deuxième unité de mesure (18) est montée sur un deuxième corps (12) des deux corps (10, 12),
un faisceau de rayons lumineux (28) est généré au moyen de la première unité de mesure (14),
le faisceau de rayons lumineux (28) est réfléchi vers une surface diffusante (34) de la première unité de mesure (14) au moyen d'un système réflecteur (38) de la deuxième unité de mesure (18),
au moins une image de la surface diffusante (34) est acquise par une caméra (36) de la deuxième unité de mesure (18), et
l'au moins une image est évaluée afin de déterminer au moins une position d'incidence (WV, PV) du faisceau de rayons lumineux réfléchi par le système réflecteur vers la surface diffusante (34) et pour détecter à partir de celle-ci un écart de position du premier corps par rapport à une position nominale du premier corps et un écart de position du deuxième corps par rapport à une position nominale du deuxième corps.
